# EUROPÄISCHE PATENTANMELDUNG

(11) **EP 1 982 769 A1**
(43) Veröffentlichungstag der Anmeldung: **22.10.2008**
(21) Anmeldenummer: 08001855.9
(22) Anmeldetag: 31.01.2008
(51) Int. Cl.: B02C 15/00, F16H 1/46, F16H 37/06

(54) **Drehzahlvariables Mühlengetriebe**

(30) Priorität: 16.04.2007 DE 102007017755
(71) Anmelder: Loesche GmbH, 40549 Düsseldorf (DE)
(72) Erfinder: Keyssner, Michael, 40489 Düsseldorf (DE)
(74) Vertreter: Heim, Hans-Karl

(57) **Zusammenfassung**

Die Erfindung betrifft ein drehzahlvariables Mühlengetriebe für Wälzmühlen. Um mit Hilfe von mechanischen Komponenten eine stufenlose Drehzahlverstellung und eine dem jeweiligen Mahlgut und der gewünschten Produktfeinheit entsprechende optimale Schüsseldrehzahl stufenlos einstellen zu können, weist das erfindungsgemäße Wälzmühlengetriebe neben einer Kegelradstufe (4) wenigstens eine Planetenradstufe (10) mit einem innen- und außenverzahnten Hohlrad (14) auf, welches separat gelagert ist und dessen Drehrichtung mit Hilfe eines separaten Antriebes (15) vorwärts und rückwärts bezogen auf die Drehrichtung des Abtriebsflansches (9) geändert werden kann.

## Beschreibung

Die Erfindung betrifft ein drehzahlvariables Mühlengetriebe gemäß dem Oberbegriff des Anspruchs 1, 10 und 12. Die Erfindung ist insbesondere für Wälzmühlen geeignet, bei welchen auf einer rotierenden Mahlschüssel und einem darauf aufgebauten Mahlbett Mahlwalzen abrollen.

Die Drehzahlverstellung eines Mühlenantriebs dient der Einstellung einer optimalen Schüsseldrehzahl in Abhängigkeit von den Eigenschaften des Mahlgutes, wie Mahlbarkeit, Aufgabefeuchte, Aufgabestückgröße, und der gewünschten Produktfeinheit. Aus Kostengründen werden Wälzmühlen in der Mehrheit mit einem Antrieb mit konstanter Drehzahl ausgestattet, obwohl entsprechend den jeweiligen Anforderungen an die Mahlung durch die Wahl einer optimalen Drehzahl Leistungssteigerungen der Wälzmühle möglich sind. Bekannte Drehzahlverstellungen werden mit Hilfe von elektrischen Einrichtungen (Frequenzumformer) oder Vorschaltgetrieben, welche zwischen dem Mühlenmotor und dem Mühlenhauptgetriebe angeordnet werden, realisiert.

Insbesondere für Antriebsleistungen für > 2.000 kW sind die elektrischen Einrichtungen sehr kostenintensiv und erhöhen die Gesamtkosten einer Wälzmühle beträchtlich. Darüber hinaus sind die elektrischen Bauteile der Frequenzumrichter anfällig gegenüber der staubhaltigen Atmosphäre, in welcher die Mühlen normalerweise arbeiten. Die Folge sind Ausfälle, welche nur durch die Aufstellung der elektrischen Einrichtung in staubfreien Räumen vermieden werden können.

Bei Einsatz von Schaltgetrieben zur Drehzahlverstellung müssen Drehzahlabstufungen festgelegt werden, welche unter Umständen nicht die optimale Schüsseldrehzahl bewirken. Eine stufenlose Drehzahlverstellung kann auch mit Hilfe eines mehrstufigen Schaltgetriebes nicht erreicht werden.

Der Erfindung liegt die **Aufgabe** zugrunde, drehzahlvariable Mühlengetriebe zu schaffen, welche mit besonders geringen Kosten eine Drehzahlverstellung und Einstellung einer optimalen Schüsseldrehzahl ermöglichen.

Erfindungsgemäß wird die Aufgabe durch die Merkmale des Anspruchs 1 sowie der Ansprüche 10 und 12 gelöst. Vorteilhafte Ausgestaltungen sind in den Unteransprüchen und in der Figurenbeschreibung beschrieben.

Ein Grundgedanke der Erfindung kann darin gesehen werden, eine stufenlose Drehzahlverstellung mit Hilfe von mechanischen Komponenten durchzuführen und wenigstens eine Planetenradstufe eines Mühlengetriebes derart auszubilden, dass eine stufenlose Einstellung einer optimalen Schüsseldrehzahl ermöglicht wird.

Eine Planetenradstufe besteht aus einem Sonnenrad im Zentrum, um dieses Sonnenrad angeordnete Planetenräder, welche sich in einem gemeinsamen Hohlrad mit Innenverzahnung abstützen. Der Abstand und die Führung der Planetenräder erfolgt durch einen Planetenradträger. Ein wesentlicher Vorteil der Planetenradstufe eines Mühlengetriebes ist die Lastaufteilung auf mehrere Planetenräder gegenüber einer Stirnradstufe, wo die Lastübertragung nur über einen Verzahnungseingriff erfolgt. Bei den bekannten Planetenradgetrieben, welche in Wälzmühlen eingesetzt werden, ist das Hohlrad im Getriebegehäuse festgesetzt, und das Sonnenrad wird über eine Zahnkupplung und eine vorgeschaltete Kegelradstufe angetrieben. Die umlaufenden Planetenräder drehen gemeinsam den Planetenradträger, der mit dem Antriebsflansch des Getriebes und der Mahlschüssel verbunden ist. Diese Anordnung eines feststehenden Hohlrades ergibt in Abhängigkeit von der gewählten Verzahnungsgeometrie (Zahnmodul, Zähnezahl, Zahnraddurchmesser) und der daraus resultierenden Untersetzung eine konstante Abtriebsdrehzahl, wenn ein Motor ohne elektrische Verstelleinrichtung eingesetzt wird.

Erfindungsgemäß ist das Hohlrad separat gelagert und nicht im Getriebegehäuse festgesetzt. Außerdem ist ein separater Antrieb für das Hohlrad vorgesehen, so dass das Hohlrad vorwärts und rückwärts, bezogen auf die Drehrichtung des Abtriebsflansches, gedreht werden kann. Durch die mögliche Einstellung der Drehrichtung des Hohlrades kann die Abtriebsdrehzahl des Getriebes stufenlos verstellt werden. Eine Erhöhung der Abtriebsdrehzahl wird durch ein gleichsinniges Drehen des Hohlrades zur Abtriebsdrehrichtung und eine Verringerung der Abtriebsdrehzahl des Getriebes durch ein gegensinniges Drehen des Hohlrades erreicht.

Es ist vorteilhaft, dass eine stufenlose Verstellung der Abtriebsdrehzahl des Getriebes mit Hilfe des separat gelagerten und separat angetriebenen Hohlrades in einem Bereich von etwa +/- 25% realisiert werden kann.

Grundsätzlich wird der Verstellbereich durch die Leistung des zu installierenden Antriebes für das Hohlrad bestimmt, da der separate Antrieb in einem ähnlichen Prozentsatz zur Hauptantriebsleistung wie die gewünschte Drehzahlverstellung stehen muss.

Zweckmäßigerweise weist das Hohlrad der Planetenradstufe zusätzlich zu einer Innenverzahnung eine Außenverzahnung auf, in welche wenigstens ein Antriebselement des separaten Antriebs eintreibt.

Der separate Antrieb für das gleichsinnige oder gegensinnige Drehen zur Abtriebsdrehrichtung kann ein relativ großer Motor sein, welcher lösbar mit der Antriebswelle des Antriebselementes verbunden ist und unterhalb oder oberhalb des Hohlrades angeordnet sein kann.

Alternativ können an Stelle des relativ großen Antriebs mehrere kleinere, separate Antriebe rund um das separat gelagerte Hohlrad angeordnet werden. Die Motoren der kleineren Antriebe sind dann elektrisch synchronisiert, um eine entsprechende Lastaufteilung zu gewährleisten.

In einer alternativen Ausbildung ist das drehzahlvariable Mühlengetriebe als ein dreistufiges Getriebe ausgebildet und weist neben einer Kegelradstufe zwei Planetenradstufen auf. Erfindungsgemäß ist die erste Planetenradstufe und die zweite Planetenradstufe jeweils mit einem separat gelagerten Hohlrad versehen und beide Hohlräder können durch jeweils einen separaten Antrieb gleichsinnig oder gegensinnig zur Antriebsdrehrichtung gedreht werden, um die Abtriebsdrehzahl des Getriebes stufenlos zu optimieren.

Grundsätzlich kann auch nur eines der beiden Hohlräder separat von einem größeren oder mehren kleineren Antrieben angetrieben werden, um eine optimale Schüsseldrehzahl und damit eine Leistungssteigerung der Mühle zu erreichen.

In einer weiteren Ausbildungsvariante der Erfindung kann ein drehzahlvariables Mühlengetriebe dreistufig ausgebildet sein und eine Kegelradstufe sowie zwei Planetenradstufen aufweisen. Die Planetenradstufen sind dabei fest miteinander verbunden und werden zusammen von einem Antrieb oder mehreren separaten Antrieben zusammen gedreht. Die Lagerung der miteinander verbundenen ersten und zweiten Planetenradstufen, beispielsweise ein Gleitlager, stützt sich auf das Getriebegehäuse ab.

Der separate Antrieb des drehbar gelagerten Hohlrades einer Planetenradstufe kann einen Elektromotor mit vertikaler Antriebswelle beziehungsweise mehrere Motoren mit vertikalen Antriebswellen aufweisen, welche zweckmäßigerweise über eine Kupplung lösbar mit dem jeweiligen Antriebselement beziehungsweise dessen Antriebswelle verbunden sind.

Durch den Einsatz einer oder mehrerer Kegelradstufen kann die vertikale Anordnung des separaten Motors oder der separaten Motoren in eine horizontale Anordnung verändert werden.

Die Vorteile des drehzahlvariablen Mühlengetriebes bestehen in der stufenlosen Verstellung der Abtriebsdrehzahl des Getriebes zur Einstellung einer optimalen Schüsseldrehzahl entsprechend dem jeweiligen Aufgabegut und der angestrebten Produktfeinheit, in einer Leistungssteigerung der Mühle sowie in einer kostengünstigen Herstellung eines drehzahlvariablen Mühlengetriebes.

Die Erfindung wird nachstehend anhand einer Zeichnung weiter erläutert; in dieser zeigen in einer stark schematisierten Darstellung
- Fig. 1: das Prinzipbild eines erfindungsgemäßen drehzahlvariablen Wälzmühlengetriebes;
- Fig. 2: einen Horizontalschnitt gemäß Linie II in Fig. 1;
- Fig.3: das Prinzipbild einer zweiten Ausbildungsvariante eines erfindungsgemäßen drehzahlvariablen Wälzmühlengetriebes;
- Fig. 4: das Prinzipbild einer dritten Ausbildungsvariante eines erfindungsgemäßen drehzahlvariablen Wälzmühlengetriebes; und
- Fig. 5: das Prinzipbild des erfindungsgemäßen drehzahlvariablen Mühlengetriebes gemäß Fig. 1, jedoch mit einer zweiten Ausbildungsvariante für den separaten Antrieb.

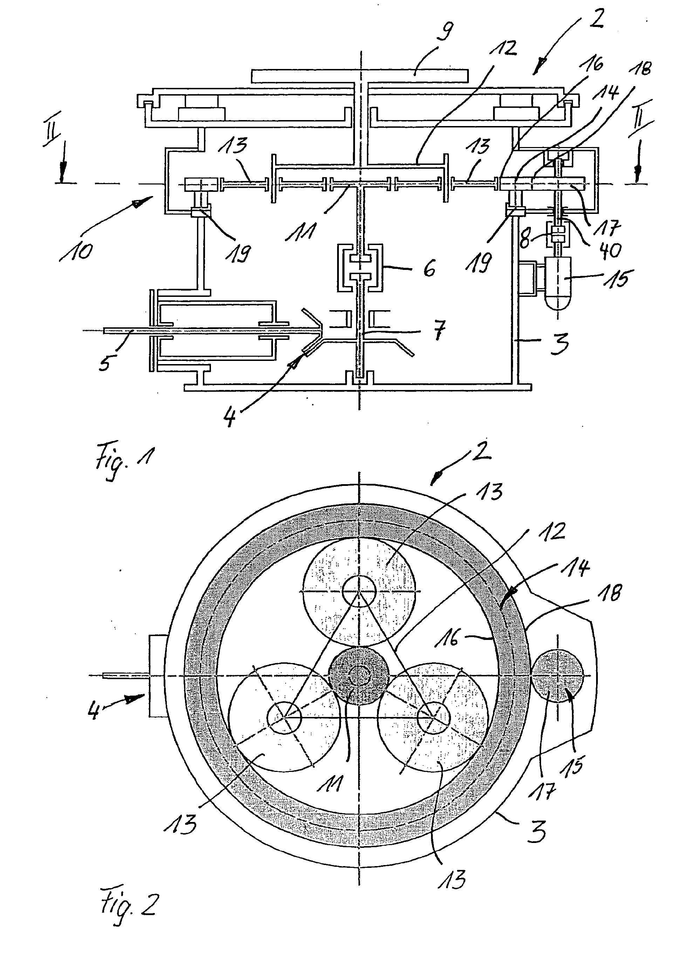

In den Figuren 1 und 2 ist eine erste Ausbildungsvariante eines Wälzmühlengetriebes, dessen Abtriebsdrehzahl mit Hilfe von mechanischen Komponenten stufenlos verstellt werden kann, gezeigt.

Das Mühlengetriebe 2 weist als Hauptantrieb für einen Abtriebsflansch 9 und eine Mahlschüssel (nicht dargestellt) eine Kegelradstufe 4 und eine Planetenradstufe 10 auf, welche in an sich bekannter Weise ausgebildet sind und zusammenwirken.

Die Planetenradstufe 10 besteht aus einem Sonnenrad 11 im Zentrum, drei daran angeordneten Planetenrädern 13, einem Planetenradträger 12 und einem Hohlrad 14 mit einer Innenverzahnung 16, in welches die Planetenräder 13 eintreiben. Abstand und Führung der Planetenräder 13 erfolgen durch den Planetenradträger 12, welcher mit dem Abtriebsflansch 9 und damit mit der Mahlschüssel drehfest verbunden ist. Das Sonnenrad 11 wird über eine Zahnkupplung 6 von der vorgeschalteten Kegelradstufe 4, welche mit Hilfe eines Motors ohne elektrische Verstelleinrichtung (nicht dargestellt), über eine horizontale Antriebswelle 5 und eine vertikale Antriebswelle 7 angetrieben, und die umlaufenden Planetenräder 13 drehen gemeinsam den Planetenradträger 12 und damit den Abtriebsflansch 9 und die Mahlschüssel (nicht dargestellt).

Um die für einen Mahlprozess jeweils optimale Schüsseldrehzahl einstellen zu können, ist das Hohlrad 14 der Planetenradstufe 10 derart ausgebildet, dass die Abtriebsdrehzahl des Getriebes stufenlos verstellt werden kann. Das Hohlrad 14 der Planetenradstufe 10 weist ein separates Lager 19 im Bereich des Getriebegehäuses 3 auf und ist außerdem mit Hilfe wenigstens eines separaten Antriebs 15 derart antreibbar, dass die Drehrichtung des Hohlrades geändert werden kann, das heißt, dass das Hohlrad vorwärts und rückwärts, bezogen auf die Drehrichtung des Abtriebsflansches 9, gedreht werden kann.

Das Hohlrad ist zu diesem Zweck nicht nur mit einer Innenverzahnung 16, sondern auch mit einer Außenverzahnung 18 versehen und kann mit Hilfe des separaten Antriebs 15 und eines Antriebselementes 17, welches mit der Außenverzahnung 18 des Hohlrades 14 kämmt, angetrieben und vorwärts oder rückwärts gedreht werden.

Die Abtriebsdrehzahl wird durch ein gleichsinniges Drehen des Hohlrades 14 zur Abtriebsdrehrichtung erhöht und durch ein gegensinniges Drehen des Hohlrades 14, bezogen auf die Abtriebsdrehrichtung, abgesenkt.

Der separate Antrieb 15 kann einen Elektromotor aufweisen, dessen Leistung der angestrebten Drehzahlverstellung angepasst ist. Im Ausführungsbeispiel der Fig. 1 ist der separate Antrieb 15 vertikal und unterhalb des Hohlrades 14 der Planetenradstufe 10 angeordnet und am Getriebegehäuse 3 befestigt. Der Antrieb 15 ist über eine Kupplung 8 lösbar mit der vertikalen Antriebswelle 40 des Antriebselementes 17, welches beispielsweise als Antriebsritzel ausgebildet ist, verbunden. Das separate Lager 19 des innen- und außenverzahnten Hohlrades 14 ist ein Gleitlager.

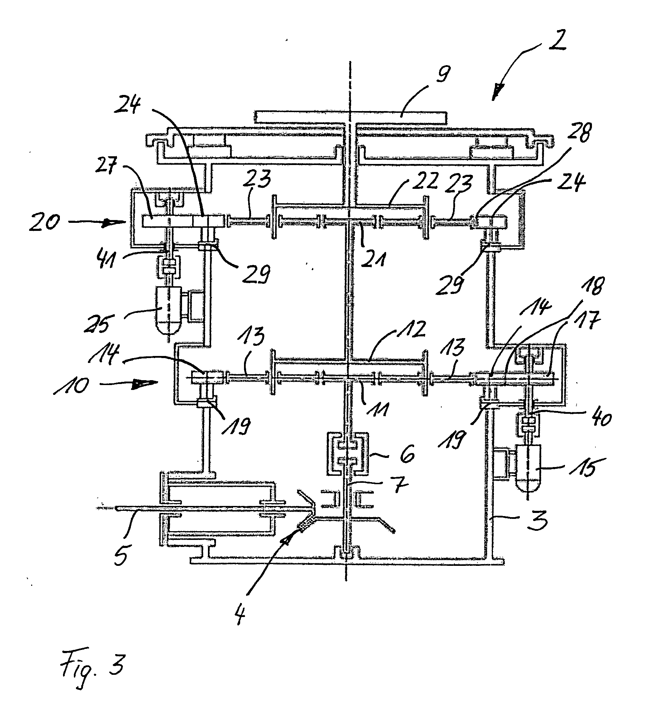

In Fig. 3 ist eine zweite Ausbildungsvariante eines erfindungsgemäßen drehzahlvariablen Mühlengetriebes 2 gezeigt, wobei dieses Wälzmühlengetriebe 2 im Vergleich zu dem zweistufigen Wälzmühlengetriebe (eine Kegelradstufe und eine Planetenradstufe) der Figuren 1 und 2 ein dreistufiges Wälzmühlengetriebe mit einer Kegelradstufe und zwei Planetenradstufen ist.

Ein derartiges dreistufiges Wälzmühlengetriebe kann beispielsweise für mittelgroße und große Wälzmühlen mit Leistungen ab 1.500 kW eingesetzt werden.

Das dreistufige Wälzmühlengetriebe gemäß Fig. 3 weist wiederum eine Kegelradstufe 4 und eine erste Planetenradstufe 10 und zusätzlich eine zweite Planetenradstufe 20 auf, wobei für eine stufenlose Drehzahlverstellung des Abtriebsflansches 9 und der Mahlschüssel (nicht dargestellt) sowohl das Hohlrad 14 der ersten Planetenradstufe 10 als auch das Hohlrad 24 der zweiten Planetenradstufe 20 jeweils einen separaten Antrieb 15, 25 und eine separate Lagerung 19, 29 aufweist.

Für identische Merkmale wurden identische Bezugszeichen verwendet. Beide Hohlräder 14, 24 weisen beim Ausführungsbeispiel der Fig. 3 einen Elektromotor als Antrieb 15 beziehungsweise 25 zum Antrieb eines Antriebselementes 17 beziehungsweise 27 auf, welches über die Außenverzahnung 18 beziehungsweise 28 das Hohlrad 14 beziehungsweise 24 kämmt.

Aufgrund der zwei Planetenradstufen 10, 20 mit jeweils einem separat antreibbaren Hohlrad 14, 24 besteht die Möglichkeit der stufenlosen Verstellung der Abtriebsdrehzahl des Abtriebsflansches 9 sowohl mit Hilfe des ersten Hohlrads 14 und/oder des zweiten Hohlrades 24.

Die Anordnung der separaten Antriebe 15, 25 mit einer vertikalen Antriebswelle 40 beziehungsweise 41 entspricht der Anordnung gemäß den Figuren 1 und 2. Alternativ könnten auch mehrere, über den Umfang der Hohlräder 14, 24 gleichmäßig verteilte kleinere Antriebe und entsprechend angeordnete Antriebselemente vorgesehen sein.

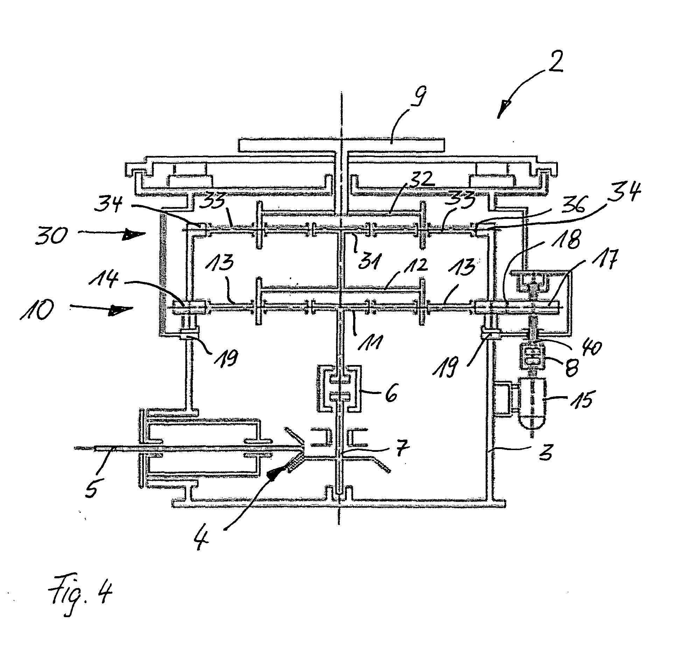

Fig. 4 zeigt eine dritte Ausbildungsvariante eines erfindungsgemäßen drehzahlvariablen Wälzmühlengetriebes 2. Bei dieser Ausbildungsvariante sind wiederum eine Kegelradstufe 4, eine erste Planetenradstufe 10 und eine zweite Planetenradstufe 30 in einem Getriebegehäuse 3 angeordnet. Das Hohlrad 14 der ersten Planetenradstufe 10 und das Hohlrad 34 der zweiten Planetenradstufe sind fest miteinander verbunden. Diese Einheit ist separat gelagert, beispielsweise mit Hilfe eines Gleitlagers 19, und außerdem separat mit Hilfe eines separaten Antriebes 15 und eines Antriebselementes 17 über eine Außenverzahnung 18 antreibbar. Die Außenverzahnung 18 kann in Höhe des Hohlrades 14 oder auch darüber angeordnet sein.

Das Hohlrad 34 der zweiten Planetenradstufe 30 ist mit einer Innenverzahnung 36 versehen. Der Antrieb erfolgt über den Planetenradträger 12 der ersten Planetenradstufe 10, über das Sonnenrad 31 und die umlaufenden Planetenräder 33, welche den Planetenradträger 32 drehen, welcher mit dem Abtriebsflansch 9 des Mühlengetriebes 2 und der Mahlschüssel (nicht dargestellt) verbunden ist.

An Stelle des einen separaten Antriebes 15 können wiederum mehrere kleinere Antriebe, welche auch oberhalb der ersten Planetenradstufe 10 oder zweiten Planetenradstufe 30 angeordnet sein können, vorgesehen sein.

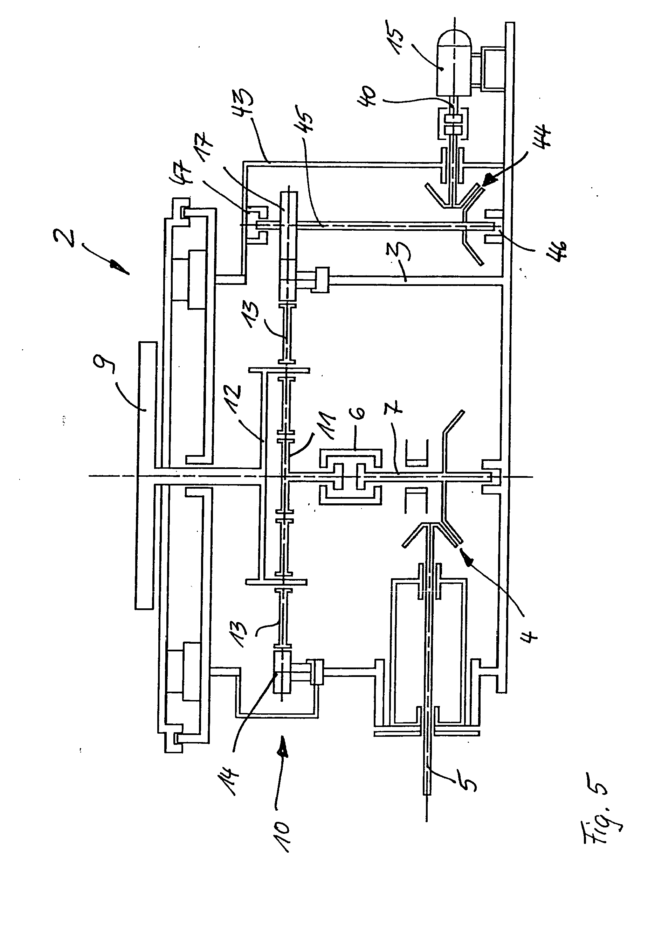

Das Wälzmühlengetriebe 2 der Fig. 5 entspricht in Bezug auf die Kegelradstufe 4 und erste Planetenradstufe 10 bis auf die Anordnung des separaten Antriebs 15 für das innen- und außenverzahnte Hohlrad 14 der Ausbildungsvariante der Figuren 1 und 2. Um eine horizontale Anordnung des separaten Antriebs 15 und der Antriebswelle 40 zu erreichen, ist eine separate Kegelradstufe 44 angeordnet. Eine vertikale Antriebswelle 45 der separaten Kegelradstufe 44 durchsetzt das Antriebselement 17 und ist endseitig in Lagern 46, 47 an einem Gehäuse 43 der separaten Kegelradstufe 44 gelagert.

Die in Fig. 5 gezeigte Anordnung eines separaten Kegelradantriebs kann für die Wälzmühlengetriebe der Figuren 1 bis 4 eingesetzt werden. Außerdem können anstelle eines separaten Kegelradantriebs für ein innen- und außenverzahntes Hohlrad eines Planetenradgetriebes auch mehrere, über den Umfang verteilte Kegelradantriebe eingesetzt werden.

## Patentansprüche

1. Drehzahlvariables Mühlengetriebe für Wälzmühlen, welche auf einer Mahlschüssel abrollende Mahlwalzen aufweisen,
mit einer Kegelradstufe (4) für den Krafteintrieb und wenigstens einer Planetenradstufe (10) für den mahlschüsselseitigen Kraftabtrieb, wobei die Planetenradstufe (10) ein Sonnenrad (11), einen Planetenradträger (12) und in ein Hohlrad (14) eintreibende Planetenräder (13) aufweist, und der Planetenradträger (12) über einen Abtriebsflansch (9) mit der Mahlschüssel drehfest verbunden ist,
**dadurch gekennzeichnet,**
**dass** das Hohlrad (14) der Planetenradstufe (10) in einem separaten Lager (19) abgestützt und durch einen separaten Antrieb (15) antreibbar ist und die Drehrichtung des Hohlrades (14) für eine stufenlose Drehzahlverstellung des Abtriebsflansches (9) und der Mahlschüssel einstellbar ist.

2. Drehzahlvariables Mühlengetriebe nach Anspruch 1,
**dadurch gekennzeichnet,**
**dass** die Kegelradstufe (4) und die Planetenradstufe (10) als Hauptantrieb die Antriebsdrehrichtung des Abtriebsflansches (9) und der Mahlschüssel bestimmen und dass das Hohlrad (14) der Planetenradstufe (10) zur Drehzahlerhöhung des Abtriebsflansches (9) und der Mahlschüssel gleichsinnig in Antriebsdrehrichtung und zur Drehzahlverringerung entgegen der Antriebsdrehrichtung antreibbar ist.

3. Drehzahlvariables Mühlengetriebe nach Anspruch 1 oder 2,
**dadurch gekennzeichnet,**
**dass** das Hohlrad (14) zusätzlich zu einer Innenverzahnung (16) eine Außenverzahnung (18) aufweist, in welche wenigstens ein Antriebselement (17) des separaten Antriebs (15) eintreibt.

4. Drehzahlvariables Mühlengetriebe nach einem der vorhergehenden Ansprüche,
**dadurch gekennzeichnet,**
**dass** als Antriebselement (17) ein Antriebsritzel auf einer Antriebswelle (40) des separaten Antriebs (15) angeordnet ist.

5. Drehzahlvariables Mühlengetriebe nach einem der vorhergehenden Ansprüche,
**dadurch gekennzeichnet,**
**dass** das innen- und außenverzahnte Hohlrad (14) als separates Lager (19) ein im Getriebegehäuse (3) abgestütztes Gleitlager aufweist.

6. Drehzahlvariables Mühlengetriebe nach einem der vorhergehenden Ansprüche,
**dadurch gekennzeichnet,**
**dass** die Leistung des separaten Antriebs (15) in Abhängigkeit vom Hauptantrieb den Bereich der mahlschüsselseitigen Drehzahlverstellung bestimmt.

7. Drehzahlvariables Mühlengetriebe nach einem der vorhergehenden Ansprüche,
**gekennzeichnet durch**
eine stufenlose Drehzahlverstellung bis etwa +/- 25%.

8. Drehzahlvariables Mühlengetriebe nach einem der vorhergehenden Ansprüche,
**dadurch gekennzeichnet,**
**dass** der separate Antrieb (15) für das Hohlrad (14) einen Elektromotor aufweist, welcher unterhalb oder oberhalb des Hohlrades (14) angeordnet und lösbar mit der Antriebswelle (40) des Antriebselementes (17) verbunden ist.

9. Drehzahlvariables Mühlengetriebe nach einem der Ansprüche 1 bis 8,
**dadurch gekennzeichnet,**
**dass** der separate Antrieb (15) für das Hohlrad (14) mehrere Elektromotoren aufweist, welche unterhalb oder oberhalb des Hohlrades (14) angeordnet sind und mit entsprechend angeordneten Antriebselementen, welche mit dem Hohlrad (14) kämmen, verbunden sind.

10. Drehzahlvariables Mühlengetriebe für Wälzmühlen, welche auf einer Mahlschüssel abrollende Mahlwalzen aufweisen,
mit einer Kegelradstufe (4) für den Krafteintrieb, einer ersten Planetenradstufe (10) und einer zweiten Planetenradstufe (20), welche jeweils ein Sonnenrad (11, 21), einen Planetenradträger (12, 22) und in ein Hohlrad (14, 24) eintreibende Planetenräder (13, 23) aufweisen, wobei der Planetenradträger (12) der ersten Planetenradstufe (10) mit dem Sonnenrad (21) der zweiten Planetenradstufe (20) verbunden ist und der Planetenradträger (22) der zweiten Planetenradstufe (20) über einen Antriebsflansch (9) mit der Mahlschüssel drehfest verbunden ist,
**dadurch gekennzeichnet,**
**dass** die Hohlräder (14, 24) der ersten und zweiten Planetenradstufe (10, 20) jeweils über ein separates Lager (19, 29) abgestützt sind und wenigstens eines der zwei Hohlräder (14, 24) durch einen separaten Antrieb (15, 25) antreibbar und die Drehrichtung wenigstens eines Hohlrades (14, 24) für eine stufenlose Drehzahlverstellung des Antriebsflansches (9) und der Mahlschüssel einstellbar ist.

11. Drehzahlvariables Mühlengetriebe nach Anspruch 10,
**dadurch gekennzeichnet,**
**dass** an Stelle des jeweils einen großen separaten Antriebs (15, 25) für die Hohlräder (14, 24) der ersten und zweiten Planetenradstufe (10, 20) mehrere kleine Antriebe vorgesehen sind.

12. Drehzahlvariables Mühlengetriebe für Wälzmühlen, welche auf einer Mahlschüssel abrollende Mahlwalzen aufweisen,
mit einer Kegelradstufe (4) für den Krafteintrieb und einer ersten Planetenradstufe (10) für den mahlschüsselseitigen Kraftabtrieb, wobei die Planetenradstufe (10) ein Sonnenrad (11), einen Planetenradträger (12) und in ein Hohlrad (14) eintreibende Planetenräder (13) aufweist, und der Planetenradträger (12) über einen Abtriebsflansch (9) mit der Mahlschüssel drehfest verbunden ist,
**dadurch gekennzeichnet,**
**dass** das Hohlrad (14) der ersten Planetenradstufe (10) in einem separaten Lager (19) abgestützt und durch einen separaten Antrieb (15) antreibbar ist,
**dass** eine zweite Planetenradstufe (30) angeordnet ist, welche ein Sonnenrad (31), einen Planetenradträger (32) und in ein Hohlrad (34) eintreibende Planetenräder (33) aufweist, wobei der Planetenradträger (32) über einen Antriebsflansch (9) mit der Mahlschüssel verbunden ist, und
**dass** das Hohlrad (34) der zweiten Planetenradstufe (30) fest mit dem Hohlrad (14) der ersten Planetenradstufe verbunden ist und beide Hohlräder (14, 34) zusammen von einem Antrieb (15) oder mehreren verteilt angeordneten separaten Antrieben antreibbar und ihre Drehrichtung für eine stufenlose Drehzahlverstellung des Antriebsflansches (9) und der Mahlschüssel einstellbar ist.

13. Drehzahlvariables Mühlengetriebe nach einem der vorhergehenden Ansprüche,
**dadurch gekennzeichnet,**
**dass** das innen- und außenverzahnte Hohlrad (14; 24) der wenigstens einen Planetenradstufe (10; 20) mit Hilfe wenigstens einer separaten Kegelradstufe (44) und horizontal angeordneten Motors (15) antreibbar ist.
